# EUROPEAN PATENT APPLICATION

(11) **EP 4 583 373 A1**
(43) Date of publication of application: **09.07.2025**
(21) Application number: 24150106.3
(22) Date of filing: 02.01.2024
(51) Int. Cl.: H02K 5/10, F16J 15/02

(54) **GASKET OF A WIPER MOTOR AND WIPER MOTOR ARRANGEMENT**

(71) Applicant: Valeo Systèmes d'Essuyage, 78322 Le Mesnil Saint Denis (FR)
(72) Inventor: CRASKE, Louis, BIETIGHEIM-BISSINGEN (DE); GUIBERT, Yannick, Chatellerault (FR); STEFANI, Siegfried, BIETIGHEIM-BISSINGEN (DE); KAPITZA, Harald, BIETIGHEIM-BISSINGEN (DE)
(74) Representative: Valeo Visibility

(57) **Abstract**

A gasket (1) configured to be installed between a housing (22) of a wiper motor (21) and a gearbox (23), having a cross-section including one rounded corner portion (11) intended to face the gearbox (23), and a lip (12) radially extending from the rounded corner portion (11). The rounded corner portion (11) and the lip (12) are designed in order to fill a free space that was existing between a rounded end (24) of the gearbox (23) and the housing (22) of the wiper motor (21), while connected to each other.

## Description

The technical background of the present invention is that of mounting elements for motorized devices. More particularly, the invention relates to a gasket of a wiper motor and wiper motor arrangement.

In the state of the art, the use of gaskets is known to optimize the coupling of mechanical elements, in particular when said mechanical elements are rotating relative to each other and/or when an air- or water-tight seal must be made between them. More particularly, the use of gasket with a simple design, such as flat gaskets, ring-shaped gaskets, or toroidal gaskets, is very common.

The invention is dedicated to the domain of wiper motors. Wiper arrangements are standard equipment for most types of automotive vehicles, for example in order to remove rainwater, dust and otherwise clean a windshield.

When a wiper motor comprises an external housing or envelope in more than one piece, as is commonly the case, it is therefore necessary to provide a gasket at the joining of these multiple pieces, so as to ensure the watertightness of the wiper motor and to prevent the ingress of dirt and other foreign substances.

Such wiper arrangements also include one or two wiper arms, both including a wiper blade configured to bear against the windshield. Each wiper is rotationally movable on the windshield thanks to a wiper motor connected to one end of its wiper arm.

Thus, the wiper motor is controlled so as to induce a back-and-forth movement of the wiper blade on the windscreen.

A known drawback of such wiper arrangements is the noise while operating. More precisely, a resonance frequency, commonly around 2,2kHz, is observed, said resonance of the wiper arrangement being at the origin of much of the perceptible noise during the operation of said wiper arrangement. Of course, such noise during operation is not desired, and has to be reduced or removed.

It is an object of the present invention to provide a new gasket in order to remediate or resolve at least some of the problems described above, and to lead to further other advantages.

Another object of the invention is to reduce the noise of a wiper arrangement.

Another object of the invention is to improve the wiper arrangement performances.

According to a first aspect of the invention, at least one of the aforementioned objectives is achieved with a gasket configured to be installed between a housing of a wiper motor and a gearbox, the gasket having a cross-section including:
- one rounded corner portion intended to face the gearbox;
- a lip extending radially outward from the rounded corner portion.

In the context of the present invention, the axial direction is considered as parallel to an axis of symmetry of the gasket according to the first aspect of the invention. In other words, the axial direction extends perpendicular to a diameter of the gasket.

In the context of the present invention, the radial direction is considered as perpendicular to the axial direction. The radial direction extends parallel to any diameter of the gasket according to the first aspect of the invention.

In the context of the present invention, the cross section of the gasket according to the first aspect of the invention is considered as lying in a plane defined by both the axial direction and the radial direction.

In the context of the present invention, the gasket is a damping element that is able to be located between the motor housing and the gearbox, around a rotating shaft of a wiper arrangement. The gasket configured to be introduced in a free space that was existing between the motor housing and the gearbox. Thus, the presence of the gasket in said free space modifies the resonance frequency of the wiper arrangement, by shifting its frequency response while the shaft is rotating. As a result, the noise emitted by the motor during operation can be reduced.

In the context of the present invention, the rounded corner portion of the gasket is configured to face the gearbox. In other words, the rounded corner portion is configured to be applied against the gearbox, and to be both radially and axially compressed between said gearbox and the wiper motor housing. The rounded corner portion makes it possible to fill the free space that was existing between the gearbox and the wiper motor housing, with respect to a radial direction.

In the context of the present invention, the lip of the gasket extends from the rounded corner portion, radially outward from said rounded corner portion. The lip is configured to being applied against the gearbox, and to being axially compressed between said gearbox and the wiper motor housing. The lip makes it possible to fill the free space that was existing between the gearbox and the wiper motor housing, with respect to an axial direction.

In the context of the present invention, the wiper motor is configured to generate a rotational movement of a wiper arm that is about to be connected to said wiper motor. The wiper motor is preferably an electric motor, for example a step motor. The wiper motor also includes some coupling elements to allow the transmission of a torque between the gearbox and said wiper motor.

In the context of the present invention, the gearbox is designed to transform and transmit the torque and/or speed of the rotating shaft, to an output of the wiper motor, onto said rotating shaft. The gearbox is mechanically coupled with the wiper motor thanks to coupling elements. As a non-limitative example, the coupling elements include axial coupling elements and/or radial coupling elements.

Thus, once mounted on a wiper arrangement, the gasket according to the first aspect of the invention makes it possible to shift the resonance frequency of said wiper arrangement, by modifying its resonance frequency via damping the mechanical vibrations and stresses induced by the rotating parts of said wiper arrangement during operation.

The gasket with respect to the first aspect of the invention advantageously includes at least one of the improvements below, the technical characteristics included in these improvements being considered independently or in combination:
- the lip extends radially outward from the rounded corner portion;
- the lip presents a rectangular cross-section. In a more general way, the lip comprises two axially opposite contact surfaces, each said contact surface being a flat surface. The contact surfaces radially extend around the axis of symmetry of the gasket according to the first aspect of the invention. The contact surfaces include a first contact surface intended to face the gearbox and a second contact surface intended to face the wiper motor housing. The first contact surface is parallel to the second contact surface;
- the gasket comprises a flat contact surface intended to face the housing, the flat contact surface extending from the lip and the rounded corner portion;
- the rounded corner portion presents a circular profile. In other words, the rounded corner portion is outward-radially defined by a circular profile, relative to the axis of symmetry of the gasket according to the first aspect of the invention;
- with respect to an axial direction, a centre of the rounded corner portion's circular profile is disposed upon a centreline radially extending from the lip, in a middle position between two axially oriented contact surfaces of said lip. In other words, the centre of the circular profile is axially located equidistant to the first contact surface and the second contact surface of the lip of the gasket according to the first aspect of the invention;
- the rounded corner portion of the gasket according to the first aspect of the invention presents an angular segment included between 70° and 120°, preferably equal to 90°;
- the rounded corner portion of the gasket according to the first aspect of the invention has a radius between 1 mm and 2 mm inclusive, preferably equal to 1.6 mm;
- the lip of the gasket according to the first aspect of the invention has a length, measured from the rounded corner portion along a radial direction, between 1 mm and 5 mm inclusive, preferably equal to 7 mm;
- the lip of the gasket according to the first aspect of the invention has a width, measured along an axial direction, between 1 mm and 2 mm inclusive, preferably equal to 1.2 mm;
- the gasket according to the first aspect of the invention has a width, measured along an axial direction, between 1.5 mm and 4 mm inclusive, preferably equal to 2,2 mm;
- the gasket according to the first aspect of the invention is formed of a material comprising an elastomer
- the gasket according to the first aspect of the invention is fabricated by a moulding process.

According to a second aspect, the invention is directed towards a wiper motor arrangement comprising a wiper motor mechanically coupled with a gearbox via a rotating shaft, the motor arrangement comprising a gasket according to the first aspect of the invention or any one of its embodiments as described above, said gasket being located between a motor housing and the gearbox.

Various embodiments of the invention are provided hereafter, said embodiments being considered according to anyone of their possible combinations, explicitly described or implicitly disclosed.

Other characteristics and advantages of the invention will become highlighted through the description that follows on the one hand, and through several embodiments given as some not limiting examples related to drawings on the other hand, on which :
[Fig.1] illustrates a front view of an example or realization of the gasket according to the first aspect of the invention;
[Fig.2] illustrates a cross-view of the gasket illustrated on FIGURE 1;
[Fig.3] illustrates a detailed cross-view of an example or realization of the arrangement according to the second aspect of the invention and including the gasket illustrated on FIGURE 1.

Of course, the characteristics, the alternatives and the different embodiments of the invention can be associated with each other, according to various combinations, insofar as they are not incompatible or exclusive of each other. In particular, alternatives of the invention may comprise only a selection of characteristics described below, if such selected characteristics is enough to provide a technical advantage or to differentiate the invention from to the state of the prior art.

In particular, the alternatives and the embodiments described can be combined with each other if nothing prevents this combination from a technical point of view.

In the figures and the description, elements that are visible on several figures retain the same reference.

In the above-described FIGURES, one defines:
- an axial direction, which is considered as parallel to an axis of symmetry of the gasket 1 according to the first aspect of the invention, i.e. perpendicular to all diameters of the gasket 1;
- a radial direction, which is considered as perpendicular to the axial direction, i.e. the radial direction extending parallel to any diameter of the gasket 1 according to the first aspect of the invention;
- a cross-sectional direction considered as lying in a plane defined by both the axial direction and the radial direction.

According to its first aspect, the invention is directed towards a gasket 1 configured to be installed between a housing 22 of a wiper motor 21 and a gearbox 23, the gasket 1 having a cross-section including:
- one rounded corner portion 11 intended to face the gearbox 23;
- an lip 12 radially extending from the rounded corner portion 11.

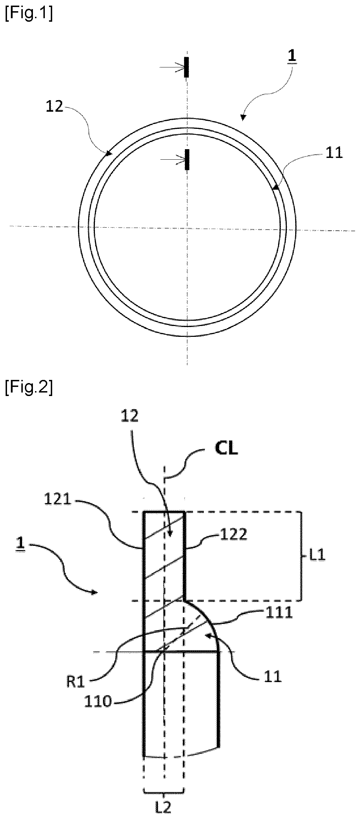

As visible in FIGURE 1, the gasket 1 has a generally circular shape. Regarding its radial direction, the gasket 1 comprises the rounded corner portion 11 that is located on the side of an axis of symmetry of said gasket 1, i.e. from the radially internal part of said gasket 1. In contrast, the lip 12 of the gasket 1 is located on the opposite side of the axis of symmetry, regarding the rounded corner portion 11, i.e. from the radially external part of said gasket 1.

Both the rounded corner portion 11 and the lip 12 extend substantially in the same plane.

In reference to FIGURE 2, the lip 12 presents a rectangular shape cross-section. In a more general way, the lip 12 comprises two axially opposite contact surfaces 121, 122, each said contact surface being a flat surface. The contact surfaces 121, 122 radially extend around the axis of symmetry of the gasket 1 according to the first aspect of the invention. The contact surfaces 121, 122 include a first contact surface 122 facing the gearbox 23 and a second contact surface 121 facing the wiper motor 21 housing 22. The first contact surface 122 is parallel to the second contact surface 121.

The second contact surface 121 extends from the lip 12 to the rounded corner portion 11.

The first contact surface 122 and the second contact surface 121 are planar. More specifically, both contact surfaces 121, 122 extend radially, i.e. perpendicular to the axis of symmetry of the gasket 1.

The lip 12 of the gasket 1 according to the first aspect of the invention has a length L1, measured from the rounded corner portion 11 along a radial direction, between 1 mm and 5 mm inclusive, preferably equal to 7 mm.

The lip 12 of the gasket 1 according to the first aspect of the invention has a width L2, measured along an axial direction, between 1 mm and 2 mm inclusive, preferably equal to 1.2 mm.

The rounded corner portion 11 is radially located on an inner side from the lip 12. The rounded corner portion 11 present a circular profile 111. The circular profile 111 is located on the same side of the gasket 1 than the first contact surface 122 of the lip 12.

With respect to the axial direction, a centre 110 of the rounded corner portion 11's circular profile 111 is disposed upon a centreline CL radially extending from the lip 12, in a middle position between two axially oriented contact surfaces 121, 122 of said lip 12. In other words, the centre 110 of the circular profile 111 is axially located equidistant to the first contact surface 122 and the second contact surface 121 of the lip 12, in the axial direction.

The circular profile 111 defines an arc of a circle whose extension is comprised between one-fifth and one-third of a full circle, and preferably equal to one quarter of a full circle.

The rounded corner portion 11 of the gasket 1 according to the first aspect of the invention has a radius R1 between 1 mm and 2 mm inclusive, preferably equal to 1.6 mm.

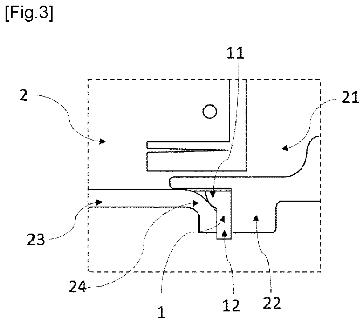

With reference to FIGURE 3, the invention also assesses a wiper motor 21 arrangement 2 comprising a wiper motor 21 that is mechanically coupled with a gearbox 23 via a rotating shaft, the motor arrangement 2 comprising a gasket 1 according to the invention and as described above, said gasket 1 being located between a motor housing 22 and the gearbox 23.

More precisely, the gasket 1 is located near a rounded end 24 of the gearbox 23. In the previously known wiper motor 21 arrangements 2, one could observe a free space between the rounded end 24 of the gearbox 23 and the housing 22 of the wiper motor 21, in both the radial and axial directions. In contrast, the invention aims at filling such free space with the gasket 1 of the invention. Thus, by providing a specific gasket with a very specific design, it makes it possible to change the resonance frequency of the wiper motor 21 arrangement 2, and thus to reduce the noise of such arrangement 2 while operating.

In such an arrangement 2, the rounded corner portion 11 of the gasket 1 is facing the gearbox 23, and more precisely its rounded end 24. The rounded corner portion 11 is configured to be applied against the rounded end 24 of the gearbox 23, and thus to be both radially and axially compressed between said rounded end 24 of the gearbox 23 and the wiper motor 21 housing 22.

The lip 12 is configured to be applied against the rounded end 24 of the gearbox 23, and to be axially compressed between said rounded end 24 of the gearbox 23 and the wiper motor 21 housing 22.

In summary, the invention concerns a gasket 1 dedicated to being installed between a housing 22 of a wiper motor 21 and a gearbox 23, the gasket 1 having a cross-section including one rounded corner portion 11 intended to face the gearbox 23, and an lip 12 radially extending from the rounded corner portion 11. The rounded corner portion 11 and the lip 12 are designed in order to fill a free space formed between a rounded end 24 of the gearbox 23 and the housing 22 of the wiper motor 21, while connected to each other. Thus, it makes it possible to change a resonance frequency of such arrangement 2, and to further reduce the noise while operating.

Of course, the invention is not limited to the examples that have been described and many adjustments can be made to these examples without departing from the scope of the invention. In particular, the different characteristics, forms, alternatives and embodiments of the invention may be combined with each other in various combinations insofar as they are not incompatible or exclusive of each other. In particular, all the alternatives and embodiments described here above can be combined with each other.

## Claims

1. Gasket (1) configured to be installed between a housing (22) of a wiper motor (21) and a gearbox (23), the gasket (1) having a cross-section including:
- one rounded corner portion (11) intended to face the gearbox (23);
- a lip (12) extending radially outward from the rounded corner portion (11).

2. Gasket (1) according to the preceding claim, wherein the lip (12) presents a rectangular cross-section.

3. Gasket (1) according to any one of the preceding claims, wherein the gasket (1) comprises a flat contact surface intended to face the housing (22), the flat contact surface extending from the lip (12) and the rounded corner portion (11).

4. Gasket (1) according to any one of the preceding claims, wherein the rounded corner portion (11) presents a circular profile (111).

5. Gasket (1) according to the preceding claim, wherein with respect to an axial direction, a centre (110) of the rounded corner portion (1 1)'s circular profile (111) is disposed upon a centreline (CL) radially extending from the lip (12), in a middle position between two axially oriented contact surfaces (121, 122) of said lip (12).

6. Gasket (1) according to any one of the preceding claims, wherein the rounded corner portion (11) presents an angular segment included between 70° and 120°, preferably equal to 90°.

7. Gasket (1) according to any one of the preceding claims, wherein the rounded corner portion (11) has a radius (R1) between 1 mm and 2 mm inclusive, preferably equal to 1.6 mm.

8. Gasket (1) according to any one of the preceding claims, whereas the lip (12) has a length (L1), as measured from the rounded corner portion (11) along a radial direction, between 1 mm and 5 mm inclusive, preferably equal to 7 mm.

9. Gasket (1) according to any one of the preceding claims, wherein the lip (12) presents a width (L2), measured along an axial direction, included between 1 mm and 2 mm, preferably equal to 1.2 mm.

10. Gasket (1) according to any one of the preceding claims, whereas the gasket (1) has a width (L2), measured along an axial direction, between 1.5 mm and 4 mm inclusive, preferably equal to 2.2 mm.

11. Wiper motor (21) arrangement (2) comprising a wiper motor (21) mechanically coupled with a gearbox (23) via a rotating shaft, the motor arrangement (2) comprising a gasket (1) according to any one of the preceding claims, said gasket (1) being located between a motor housing (22) and the gearbox (23).
